# EUROPEAN PATENT APPLICATION

(11) **EP 4 299 371 A1**
(43) Date of publication of application: **03.01.2024**
(21) Application number: 23172325.5
(22) Date of filing: 09.05.2023
(51) Int. Cl.: B60N 2/70, A47C 7/18, B33Y 80/00

(54) **PRINTING BIODEGRADABLE MATERIAL WITH OPTIMIZATION OF STIFFNESS**

(30) Priority: 14.05.2022 IN 202241027837; 31.08.2022 US 202217900656
(71) Applicant: B/E Aerospace, Inc., Winston-Salem, NC 27105 (US)
(72) Inventor: WHYTE, Nicole Sluder, Mesa, AZ (US); DOWTY, Mark B., Rural Hall, 27045 (US); JOHNSON, Glenn A., Rural Hall, 27045 (US); NEKKAR, Guraraja, Bangalore (IN); SALDANHA, Nikhil Anthony, Bengaluru, Karnataka (IN); KRISHNAMURTHY, Chirag, Bangalore, Karnataka (IN); FINLAY, Travis K., Winston-Salem, NC (US); DEMPAH, Maxime, Atlanta (US)
(74) Representative: Dehns

(57) **Abstract**

In some embodiments, a cushion material (108) is disclosed. The cushion material (108) is configured to be 3D-printable. The cushion material (108) includes a plurality of gyroid lattice structures (106) configured to be 3D-printable. The plurality of gyroid lattice structures (106) are aligned along, and with respect to, a surface of the cushion material (108). In some embodiments, a method for providing a cushion material (108) that is capable of being 3D printed is disclosed. The method includes generating a design of the cushion material (108) comprising a variable mechanical stiffness across a surface of the cushion material (108). The method further includes producing the cushion material (108) via additive manufacturing based on the design. Generating the design includes generating a layout design of a plurality of tube-like shaped gyroid lattice structures (106) of the cushion material (108) aligned with the surface of the cushion material (108).

## Description

### CROSS-REFERENCE TO RELATED APPLICATIONS

The present application claims the benefit of India Provisional Patent Application 202241027837, filed May 14, 2022, entitled PRINTING BIODEGRADABLE MATERIAL WITH OPTIMIZATION OF STIFFNESS, naming Nicole Sluder Whyte, Mark B Dowty, Glenn A Johnson, Gururaja Nekkar, Nikhil Anthony Saldanha, Chirag Krishnamurthy, Travis K Finlay, and Maxime Dempah as inventors.

### TECHNICAL FIELD

Embodiments of the inventive concepts disclosed herein are directed generally to printable materials and more particularly to printable materials with particular properties.

### BACKGROUND

Cushions are typically made from a foam cut to a specific shape, such as polyurethane foam. To achieve different stiffnesses (e.g., throughout a cushion), different foams having different uniform stiffnesses and thicknesses may be layered and glued together. This process can be slow, tedious, and expensive. Further, such foams do not degrade in landfills, and may utilize several carcinogenic substances in their manufacturing process-releasing toxic gases if burned.

### SUMMARY

In some embodiments, a cushion material is disclosed. The cushion material is configured to be 3D-printable. The cushion material includes a plurality of gyroid lattice structures configured to be 3D-printable. The plurality of gyroid lattice structures are aligned along, and with respect to, a surface of the cushion material.

In some embodiments, a method for providing a cushion material that is capable of being 3D printed is disclosed. The method includes generating a design of the cushion material comprising a variable mechanical stiffness across a surface of the cushion material. The method further includes producing the cushion material via additive manufacturing based on the design. Generating the design includes generating a layout design of a plurality of tube-like shaped gyroid lattice structures of the cushion material aligned with the surface of the cushion material.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A illustrates a diagram of various elements of a cushion material, in accordance with one or more embodiments of this disclosure;
FIG. 1B illustrates an aircraft seat including various cushions materials, in accordance with one or more embodiments of this disclosure;
FIG. 2A illustrates a schematic of an optimized stiffness profile of a gyroid lattice structure, in accordance with one or more embodiments of this disclosure;
FIG. 2B illustrates a gyroid lattice structure with layers of various stiffness, in accordance with one or more embodiments of this disclosure; and
FIG. 3 illustrates a flow diagram illustrating a method or process for producing a cushion material, in accordance with one or more embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

Broadly speaking, embodiments of the inventive concepts disclosed herein are directed to a printable cushion material having tunable stiffness. Further, in at least some embodiments, the printable cushion material is flame retardant and biodegradable.

In at least one embodiment, the cushion material 108 has a combination of at least the following properties: flame retardant, biodegradable, ventilation (e.g., via voids), and optimized and/or varying stiffness, through one or more embodiments described in the present disclosure.

Designing an optimal cushion that meets a variety of needs can be challenging. Typical cushion designs have been limited in their ability to provide a variety of benefits simultaneously. Raw foams are typically a homogeneous layer of foam with a predetermined and uniform thickness and stiffness. For example, a nuanced, precise stiffness may be unavailable and may require combining different foams with different thicknesses to obtain even a rough approximation of the desired stiffness. This may limit the ability to provide optimal cushion comfort.

Further, typical foams do not degrade in landfills. For example, using a biodegradable foam in a cushion design may be difficult because biodegradable foams may not be available in the desired stiffnesses or at all. In addition, typical polyurethane foams may be flammable, release toxic chemicals when burned, and be a relatively high fire risk in an aircraft environment. Moreover, typical foams may, due to a lack of air movement, be inherently insulative in nature, increasing a heat and discomfort of a user.

However, it is contemplated herein, that a cushion material design may exist, embodied in one or more embodiments of materials and methods of the present disclosure, that addresses at least some of the drawbacks of conventional cushions described above.

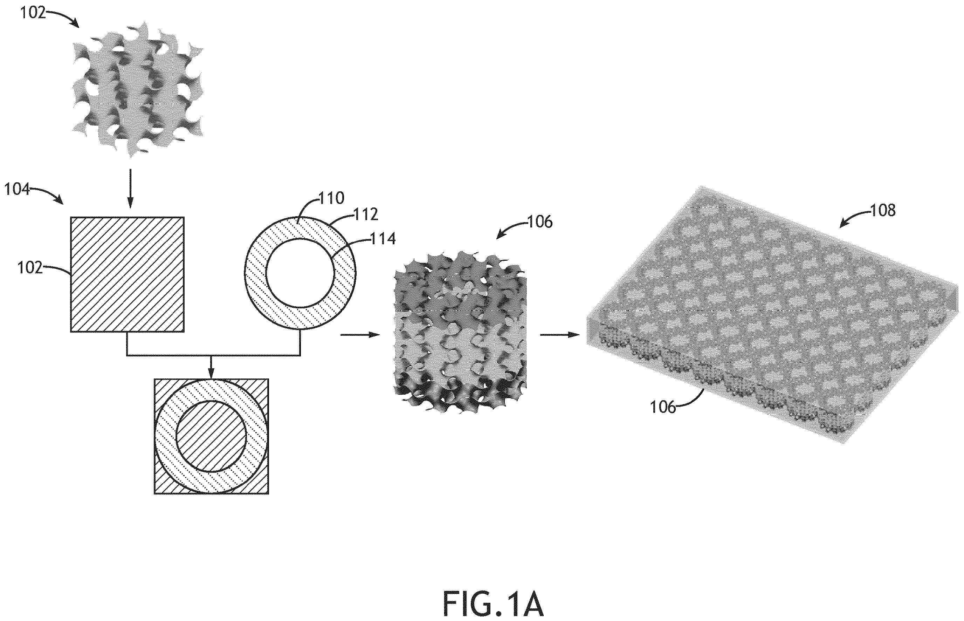

Referring to FIG. 1A, a diagram of various elements of a cushion material 108 is illustrated, in accordance with one or more embodiments of this disclosure.

In at least some embodiments, a cushion material 108 includes a 3D printable material 102 (e.g., a lattice configured to be 3D printable). For example, the 3D printable material 102 may be a gyroid lattice 102 as shown (i.e., and printable via additive manufacturing). For example, a pattern of surfaces of the gyroid lattice 102 may be configured so as to be shaped and connected such that a 3D printing software and hardware combination may be capable of producing such a design via a 3D printing method. Not that the nonlimiting lattice 102 shown is for illustrative purposes and various lattice structures may be used in embodiments of the present disclosure.

Further, it is contemplated, variations in the structure of the gyroid lattice 102 may produce differing stiffnesses (i.e., mechanical stiffnesses). For example, different densities of surfaces of the gyroid lattice 102, thicknesses of surfaces, connections between surfaces, surface profiles, orientation of surfaces, and the like may produce a gyroid lattices 102 having different stiffnesses. Such stiffnesses may be determined through any analysis, including through simulation (e.g., Finite Element Analysis (FEA)), experimental testing, and the like. Based on such an analysis, a gyroid lattice 102, gyroid lattice structure 106, cushion material 108, and the like, may be configured to have any specific stiffness (e.g., optimal stiffness, varying stiffness, and/or the like). Further, in an exemplary embodiment, a variation of stiffness within and/or between a gyroid lattice structure 106 may exist by virtue of using a different material (e.g., different filament material of a 3D printing process).

A gyroid lattice structure 106 may include a gyroid lattice 102 and be configured to be 3D-printable. For example, the gyroid lattice structure 106 may include the gyroid lattice 102 and be based on a cross-sectional shape 110 and/or a void defined by an inner surface 114 of the gyroid lattice structure 106 (see diagram 104 of FIG. 1A). It should be noted that the examples shown are for illustration purposes only, and any void or cross-sectional shape 110 may be used.

In at least one embodiment, each gyroid lattice structure 106 has a tube-like shape 110 as shown by gyroid lattice structure 106 in FIG. 1A.

For example, in at least some embodiments, a plurality of gyroid lattice structures 106 include a plurality of voids defined by the plurality of gyroid lattice structures 106 and aligned with the cushion material 108 (i.e., in a surface-facing direction). For example, such voids may provide for increased ventilation and reduced material use/cost and weight. For example, air may be capable of rising up or down through the voids.

In at least some embodiments, a cushion material 108 may include a plurality of gyroid lattice structures 106. The cushion material 108 may be a cushion or be used with other material to form a cushion. For example, the cushion may have a cover layer (e.g., fabric).

In one example, the plurality of gyroid lattice structures 106 may be aligned along, and with respect to, a surface of the cushion material 108 as shown in FIG. 1A. For instance, aligned with a surface facing direction of the cushion material.

Note that a "surface facing direction", for purposes of this disclosure, may be defined as normal (perpendicular) to a surface of the cushion material 108. For instance, such a surface could be a primary surface such as an upper surface, lower surface, or the like (e.g., a surface configured to support a body part of a user, upper facing portion of a seat cushion, and the like). Further, the surface facing direction may vary across the surface of the cushion material 108. For example, a curved cushion (e.g., any curved cushion such as a curved backrest) may have a surface facing direction that varies and remains normal to a curved surface of the curved cushion. In this regard, the plurality of gyroid lattice structures 106 may stay aligned with a desired direction of support.

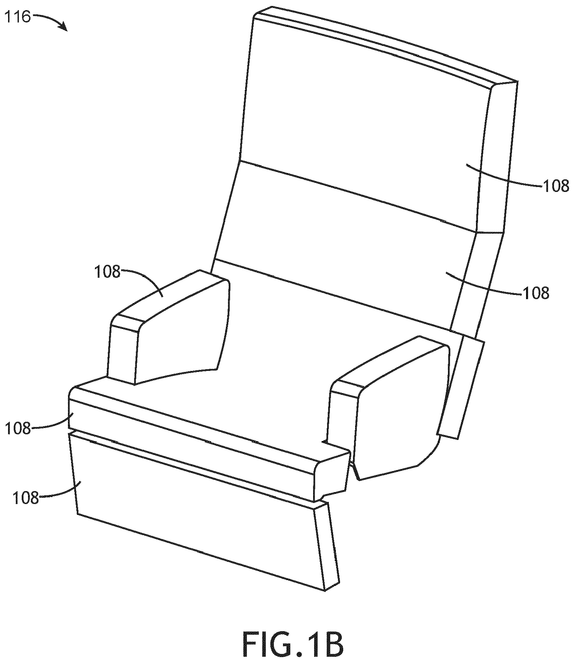

Referring to FIG. 1B, an aircraft seat 116 including various cushion materials 108 is illustrated, in accordance with one or more embodiments of this disclosure. For example, the cushion material 108 may be used to make a cushion for an aircraft seat 116. For example, the cushion (e.g., cushion material 108) may be a headrest cushion, a backrest cushion, a seat cushion, a footrest cushion, an armrest cushion, or the like.

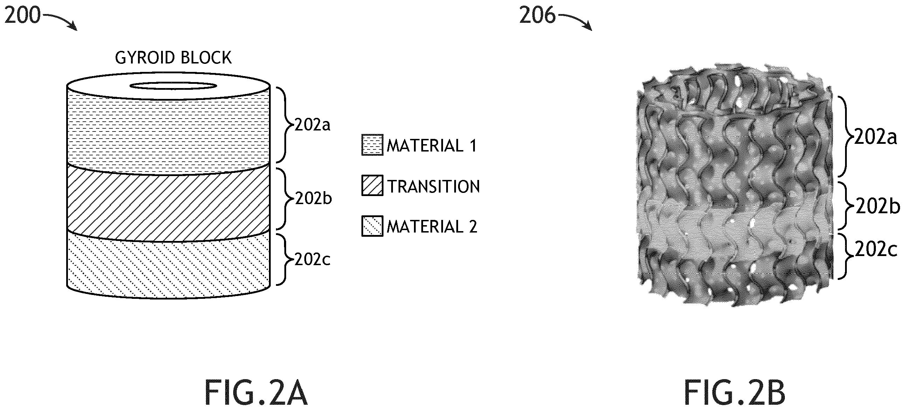

Referring to FIG. 2A, a schematic of an optimized stiffness profile 200 of a gyroid lattice structure 106 is illustrated, in accordance with one or more embodiments of this disclosure.

In at least some embodiments, each gyroid lattice structure 106 of at least some of the plurality of gyroid lattice structures 106 include a variable mechanical stiffness profile along the surface-facing direction of the gyroid lattice structure 106. For example, the gyroid lattice structure 106 may include a first material stiffness 202a, followed by a second (different) material stiffness 202b, followed by the first material stiffness 202c, where a transition material stiffness is located between such material stiffnesses 202a, 202b. In this regard, as the gyroid lattice structure 106 is compressed (displaced), a plotted curve (not shown) of force required per unit of displacement may be varied (e.g., optimized) for a desired level of comfort. Further, different areas of a cushion material 108 may utilize different stiffness profiles such that the stiffness profiles across the surface of the cushion material 108 vary.

It should be noted that the term "stiffness" and other similar terms are used throughout, however the various embodiments of the present disclosure may similarly allow for differences in (e.g., variations in, optimization of, and the like) an indentation load deflection (ILD) property throughout a cushion material 108. In this regard, the ILD may be similarly tunable.

Referring to FIG. 2B, a gyroid lattice structure 106 with layers of various stiffness is illustrated, in accordance with one or more embodiments of this disclosure.

For example, the gyroid lattice structure 106 may include a first layer 204a with a first stiffness, a second layer 204b with a second stiffness, and a third layer 204c with a third stiffness. For instance, different stiffnesses may be allowed by virtue of different gyroid lattices and/or different materials (e.g., different polyurethane materials). The layers may be bonded together and may be formed from a continuous 3D printing process. Further, the entire cushion material 108 may be formed from a continuous 3D printing process (e.g., including a continuous process where a filament is swapped for a different filament). In another embodiment, the cushion material is a combination of gyroid lattice structures 106 or sets of multiple gyroid lattice structures 106 that were not formed in a single continuous 3D printing process (e.g., bonded together later).

In at least some embodiments, layers (e.g., layers 204a, 204b, 204c) are blended together. It is contemplated that conventional 3D printed materials do not typically blend layers together for variable properties and that uniform foam layers cannot be blended smoothly.

In at least some embodiments, each gyroid lattice structure 106 of at least some of the plurality of gyroid lattice structures 106 include a different mechanical stiffness profile than other gyroid lattice structures 106 such that the cushion material 108 (e.g., aircraft seat) has variable mechanical stiffness profiles along at least some portions of the surface of the cushion material 108. Further, in the same example and as discussed above in regards to FIGS. 2A and 2B, at least a portion (some) of the gyroid lattice structures 106 may have a varying stiffness profile along a surface-facing direction. In this regard, the cushion material may have a dual-varying stiffness in both a direction normal to and a direction tangential to, a surface of the cushion material. Obtaining a similar dual-variation of stiffness material using conventional foam cutting techniques, if possible at all, would potentially require dozens or hundreds of unique pieces of foam of different stiffnesses configured to be shaped to match together.

In at least one embodiment, the cushion material 108 is flame retardant.

In at least one embodiment, the cushion material 108 is biodegradable. For example, the cushion material 108 may be flame retardant and biodegradable.

In at least one embodiment, some or all surfaces of the cushion material 108 have a variable height (e.g., nonplanar surface profile).

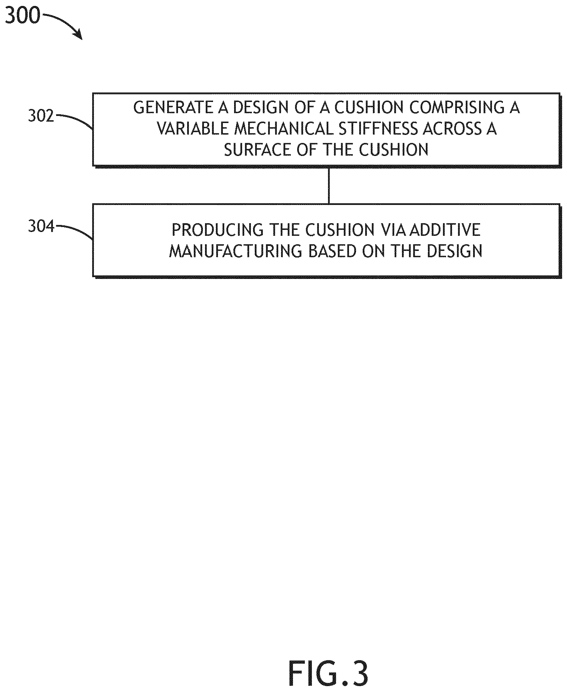

Referring to FIG. 3, a flow diagram 300 illustrating a method or process for producing a cushion material 108 is shown, in accordance with one or more embodiments of this disclosure.

At step 302, a design of a cushion (e.g., cushion material 108) including a variable mechanical stiffness across a surface of the cushion is generated. For example, the cushion may include tube-like shaped gyroid lattice structures 106 of varying stiffness profiles.

At step 304, the cushion material 108 is produced via additive manufacturing based on the design. For example, the cushion material 108 may be produced in a single additive manufacturing process (e.g., rather than assembling individual gyroid lattice structures 106).

For example, in an optional step, a layout design of a plurality of tube-like shaped gyroid lattice structures of the cushion material aligned with the surface of the cushion material is generated (e.g., on a controller, software, or the like).

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A high ventilation cushion material configured to be 3D-printable, the cushion material comprising:
a plurality of gyroid lattice structures (106) configured to be 3D-printable,
the plurality of gyroid lattice structures (106) aligned along, and with respect to, a surface of the cushion material (108); and
a surface-facing direction defined as being normal to the surface of the cushion material (108).

2. The cushion material (108) of claim 1, wherein the plurality of gyroid lattice structures (106) comprise a plurality of voids defined by the plurality of gyroid lattice structures (106) and aligned with the surface-facing direction.

3. The cushion material (108) of claim 2, wherein each of the plurality of gyroid lattice structures (106) has a tube-like shape, wherein each of the plurality of voids are defined by an inner surface of the tube-like shape.

4. The cushion material (108) of any preceding claim, wherein each gyroid lattice structure of at least some of the plurality of gyroid lattice structures (106) comprise a variable mechanical stiffness profile along the surface-facing direction.

5. The cushion material (108) of any preceding claim, wherein each gyroid lattice structure of at least some of the plurality of gyroid lattice structures (106) comprise a different mechanical stiffness profile than other gyroid lattice structures (106) such that the cushion material (108) has a variable mechanical stiffness profile along at least some portions of the surface of the cushion material (108).

6. The cushion material (108) of any preceding claim, wherein the cushion material (108) is ventilated.

7. The cushion material (108) of any preceding claim, wherein the cushion material (108) is flame retardant and biodegradable, or wherein the cushion material (108) comprises an outer layer, and optionally wherein the outer layer is fabric, and/or wherein the cushion material (108) is in a shape that is configured to be used for one of a headrest, leg rest, or back rest of an aircraft seat.

8. A method for providing a cushion material (108) that is capable of being 3D printed, the method comprising:
generating a design of the cushion material (108) comprising a variable mechanical stiffness across a surface of the cushion material (108); and
producing the cushion material (108) via additive manufacturing based on the design,
the generating the design comprising:
generating a layout design of a plurality of tube-like shaped gyroid lattice structures (106) of the cushion material (108) aligned with the surface of the cushion material (108),
a surface-facing direction defined as being normal to the surface of the cushion material (108).

9. The method of claim 8, wherein the producing comprises producing the cushion material (108) in a single additive manufacturing process.

10. The method of claim 8 or 9, wherein the surface has a variable height.

11. The method of any of claims 8 to 10, wherein each gyroid lattice structure of at least some of the plurality of gyroid lattice structures (106) comprise a variable mechanical stiffness profile along the surface-facing direction.

12. The method of any of claims 8 to 8, wherein each gyroid lattice structure of at least some of the plurality of gyroid lattice structures (106) comprise a different mechanical stiffness profile than other gyroid lattice structures (106) such that the cushion material (108) has a variable mechanical stiffness profile along at least some portions of the surface of the cushion material (108).

13. The method of any of claims 8 to 12, wherein the cushion material (108) is ventilated or wherein the cushion material (108) is flame retardant and biodegradable.

14. The method of any of claims 8 to 13, further comprising covering the cushion material (108) with an outer layer.

15. The method of any of claims 8 to 14, further comprising incorporating the cushion material (108) into an aircraft seat.
